# EUROPEAN PATENT APPLICATION

(11) **EP 4 650 772 A1**
(43) Date of publication of application: **19.11.2025**
(21) Application number: 23916194.6
(22) Date of filing: 12.12.2023
(51) Int. Cl.: G01N 30/60

(54) **COLUMN CARTRIDGE**

(30) Priority: 10.01.2023 JP 2023001509
(71) Applicant: HITACHI HIGH-TECH CORPORATION, Tokyo 105-6409 (JP)
(72) Inventor: SHIMIZU, Yusuke, Tokyo 105-6409 (JP); HASHIMOTO, Yuichiro, Tokyo 105-6409 (JP); WATANABE, Yoshito, Tokyo 105-6409 (JP); SEKIYA, Kazuma, Tokyo 105-6409 (JP); IIJIMA, Yu, Tokyo 105-6409 (JP)
(74) Representative: MERH-IP Matias Erny Reichl Hoffmann Patentanwälte PartG mbB
(86) International application number: PCT/JP2023/044336
(87) International publication number: WO 2024/150580

(57) **Abstract**

To effectively prevent an analytical column from being attached in a wrong direction, and to thereby promote correct analysis of a sample.

A column cartridge accommodates an analytical column. The analytical column includes a first passage port having a first shape in a cross section orthogonal to a passage, and a second passage port having a second shape different from the first shape in the cross section. The column cartridge comprises: a first engaging part having a shape consistent with the first shape; and a second engaging part having a shape consistent with the second shape.

## Description

### Technical Field

The present invention relates to a column cartridge that holds an analytical column in an analyzer for analyzing a sample.

### Background Art

A liquid chromatograph is employed as an analyzing method using an analytical column. The analytical column is formed by filling a long cylindrical vessel with a filler consisting of particles obtained by bonding various kinds of functional groups to a base material such as silica gels, polymer gels, and the like in a highpressure state.

The liquid chromatograph uses a liquid as a mobile phase. Generally, in order to obtain a good result such as a peak shape from the liquid chromatograph, it is necessary to adjust the temperature of the analytical column adapted to the analysis. As the temperature of the mobile phase in the analytical column increases, the mobile phase viscosity decreases, and the pressure is reduced. The analytical column of the liquid chromatograph is required to be held in a column oven cavity to adjust the column temperature. Patent Literature 1 discloses the column cartridge that accommodates the analytical column, the heater, and the temperature sensor.

According to the generally employed art as disclosed in Patent Literature 1, the flow direction of the liquid fed into the analytical column is preliminarily determined. When attaching the analytical column to the column cartridge, the analytical column has to be attached in a correct direction along the flow direction. However, there may cause the analytical column to be attached in the wrong direction owing to an error made by an operator. If the analytical column is attached in the wrong direction, there is a concern that the analyzer fails to perform correct analysis.

### Citation List

### Patent Literature

Patent Literature 1: International Publication No. WO 2012/058515

### Summary of Invention

### Technical Problem

The present invention provides a column cartridge of an analyzer, which effectively prevents the analytical column from being attached in the wrong direction, and to thereby promote correct analysis of the sample.

### Solution to Problem

The column cartridge of the analyzer according to the present invention accommodates an analytical column for liquid chromatograph. The analytical column includes a first passage port having a first shape in a cross section orthogonal to a passage, and a second passage port having a second shape different from the first shape in the cross section. The column cartridge includes a first engaging part having a shape consistent with the first shape, and a second engaging part having a shape consistent with the second shape. Advantageous Effects of Invention

According to the present invention, it is possible to effectively prevent an analytical column from being attached in the wrong direction, and to promote correct analysis of the sample.

### Brief Description of Drawings

Fig. 1 is an outside perspective drawing to explain a structure of a column cartridge 1 of an analyzer (liquid chromatograph) according to a first embodiment.
Fig. 2 is a perspective drawing illustrating a structure of a top of the column cartridge 1.
Fig. 3 is a perspective drawing illustrating a structure of a bottom of the column cartridge 1.
Fig. 4 shows drawings such as a front elevation, a right side view, and a left side view to explain the configuration of the column cartridge 1 more in detail.
Fig. 5 is a perspective drawing to further explain the structure of the column cartridge 1.
Fig. 6 is a sectional drawing to further explain the structure of the column cartridge 1.
Fig. 7 is a sectional drawing to further explain the structure of the column cartridge 1.
Fig. 8 is a perspective drawing to further explain the structure of the column cartridge 1.
Fig. 9 is a sectional drawing to explain a structure of the column cartridge 1 of an analyzer (liquid chromatograph) according to a second embodiment.
Fig. 10 is a sectional drawing to explain a structure of the column cartridge 1 of an analyzer (liquid chromatograph) according to a third embodiment.

### Description of Embodiments

The present embodiments will be described with reference to accompanying drawings. In the drawings, functionally identical elements may be represented by the same numerals. The accompanying drawings illustrate embodiments and examples according to the principle of the disclosure. Those drawings, however, are illustrated for understanding of the disclosure, and should not be used for interpreting the disclosure in a restrictive manner. Description of the specification is only a typical example, and never limits the scope of the claim and an application example of the disclosure in any arbitrary sense.

Although the embodiment has been described in sufficient detail to enable those skilled in the art to practice the disclosure, it should be understood that other implementations and configurations are possible, and that changes in structure and substitution of various elements are possible without departing from the scope and spirit of the technical idea of the present disclosure. Therefore, the following description should not be construed as being limited to this.

### [First Embodiment]

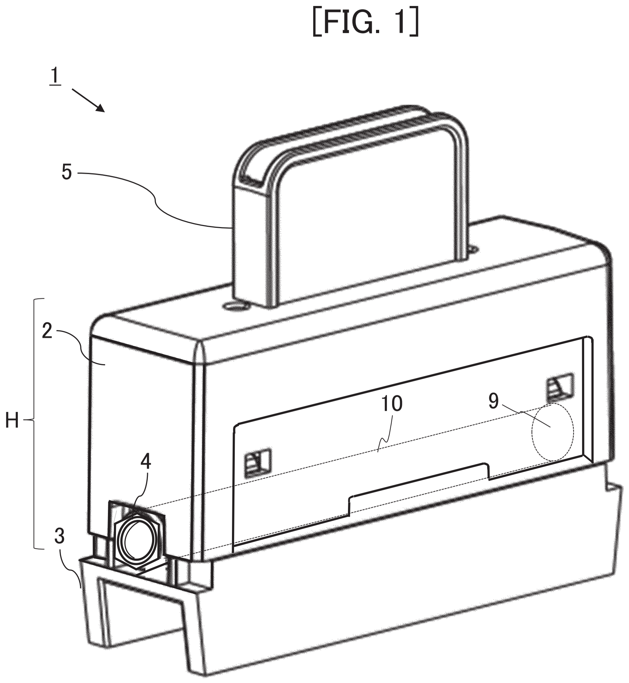

Referring to an outside perspective drawing of Fig. 1, a structure of a column cartridge 1 of the analyzer (liquid chromatograph) according to a first embodiment will be described. As Fig. 1 illustrates, the column cartridge 1 includes a resin upper housing part 2, and a resin lower housing part 3. The upper housing part 2 and the lower housing part 3 form a housing H for internally accommodating an analytical column 10. That is, the upper housing part 2 is disposed above the analytical column 10, and the lower housing part 3 is disposed below the analytical column 10. The analytical column 10 is accommodated inside the housing H constituted by those housing parts. As described below, a metal block MB fixes the analytical column 10 to the inside of the housing H.

A grip (projecting portion) 5 is formed on the top surface of the upper housing part 2. A first passage port 4 is formed as one end of the analytical column 10 in a side surface of the housing between the upper housing part 2 and the lower housing part 3. The analytical column 10 is held in the housing H while having the first passage port 4 exposed from the housing H. The mobile phase flows into the first passage port 4. A second passage port 9 is formed as the other end of the analytical column 10 in an opposite side surface of the housing H. The analytical column 10 is held in the housing H as well while having the second passage port 9 exposed to the outside of the housing H.

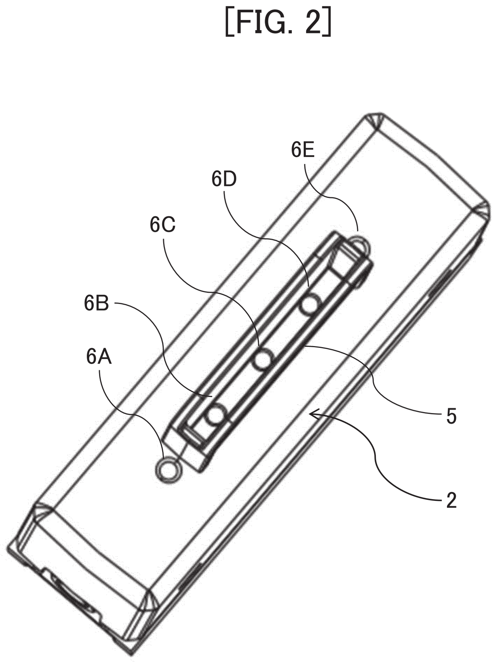

The structure of a top surface of the column cartridge 1 will be described with reference to the perspective drawing of Fig. 2. There are windows 6A, 6B, 6C, 6D, and 6E for temperature detection in the top surface of the upper housing part 2. Those windows 6A to 6E are communicated with a space for accommodating the analytical column 10. The windows 6A, 6B, 6C, 6D, and 6E are arrayed along the longitudinal direction of the analytical column 10. As illustrated in Fig. 2, the windows 6B, 6C, and 6D among those windows are formed at a position where the grip 5 is formed. Other windows 6A and 6E are disposed at outer sides of the grip 5 (extension in the longitudinal direction). Those windows are illustrated as an example, but are not limited to the illustrated example. It is preferable to set each diameter of the windows 6A, 6B, 6C, 6D, and 6E to approximately 1.4 mm or less.

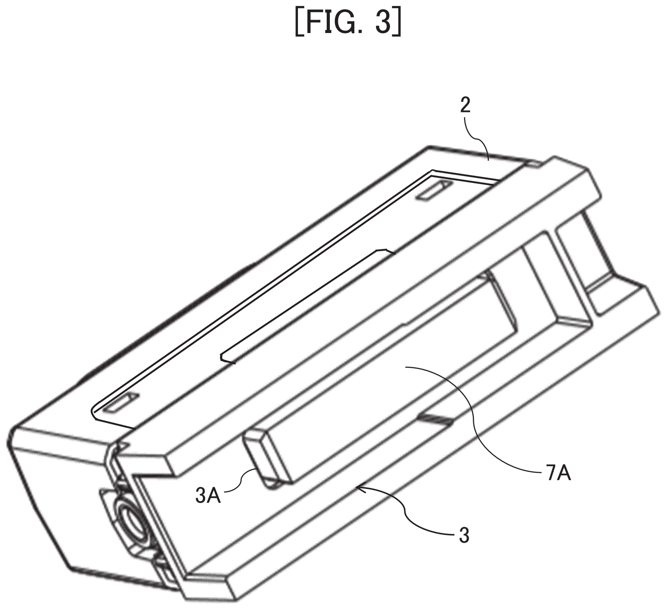

Fig. 3 illustrates a structure of a bottom surface of the column cartridge 1. An opening 3A is formed in the bottom surface of the lower housing part 3. A heat transfer part 7A of a lower metal block portion 7 to be described below is inserted into the opening 3A, and is exposed to the outside from the opening 3A. The heat transfer part 7A is in contact with a heat source (not shown) to transfer heat to the analytical column 10.

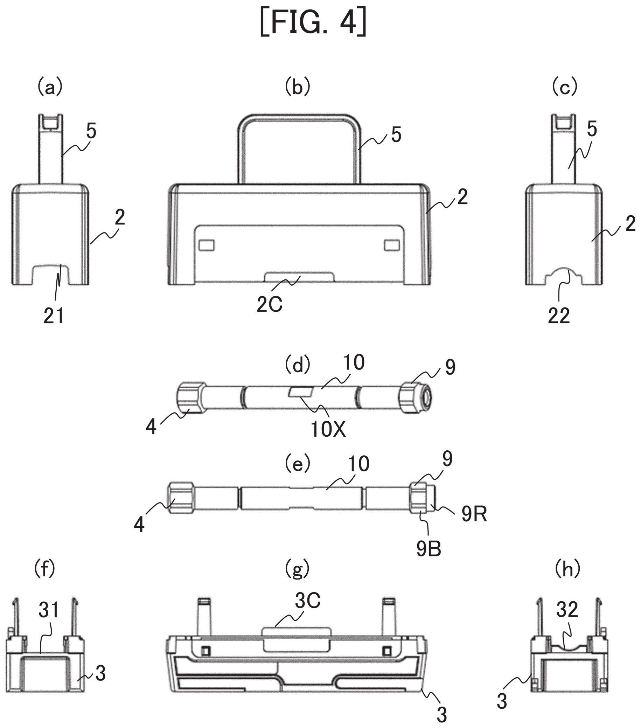

Referring to Fig. 4, the structure of the column cartridge 1 will be further described in detail. Figs. 4(a) to 4(c) correspond to a left side view, a front elevation, and a right side view of the upper housing part 2, respectively. Figs. 4(d) and 4(e) correspond to a perspective view and a front elevation of the analytical column 10, respectively. Figs. 4A(f) to 4(h) correspond to a left side view, a front elevation, and a right side view of the lower housing part 3, respectively. Fig. 4 omits illustration of the metal block MB.

As described above, the upper housing part 2 is disposed above the analytical column 10, and has upper engaging parts 21 and 22 which are engaged with both ends of the analytical column 10 (Figs. 4(a), 4(c)), respectively. The upper engaging parts 21 and 22 are formed as cutout portions to be in contact with the respective ends of the analytical column 10. The upper engaging part 21 is formed as a substantially rectangular cutout portion, and the upper engaging part 22 is formed as a cutout portion having an arcuate upper edge.

The analytical column 10 has a passage through which the liquid such as the mobile phase flows. The passage includes, at its both ends, a first passage port 4 and the second passage port 9, respectively. The liquid such as the mobile phase is fed to the inside of the analytical column 10 from the first passage port 4 as an inlet of the passage, and flows to the outside from the second passage port 9 as an outlet of the passage. As described below, the first passage port 4 and the second passage port 9 of the analytical column 10 are differently shaped from each other. For example, the first passage port 4 has a hexagonal cross section orthogonal to the direction of the passage.

The second passage port 9 includes a base 9B which has a hexagonal shape as well. A different-shape part 9R having its shape different from a hexagonal nut is formed at an end of the base. The determination with respect to the "different shape" is made on the basis of the relation to the respective shapes of the engaging parts 21, 22, 31 and 32. In other words, the "different shape" is interpreted as the shape of the different-shape part 9R that cannot be appropriately engaged with the engaging parts 21 and 31 when the analytical column 10 is attached in the wrong direction.

The different-shape part 9R may be formed to have a shape substantially consistent with the shape of the upper engaging part 22 as described above. For example, the different-shape part 9R may be formed into a columnar shape having a circular cross section with its diameter slightly smaller than that of the hexagonal base. In such a case, the lower engaging part 22 (upper edge portion) may be formed into an arcuate shape along the columnar shape. The analytical column 10 may have a cutout portion 10X for indicating the top-bottom direction.

As illustrated in Figs. 4(f) to 4(h), the lower housing part 3 is disposed below the analytical column 10, and has lower engaging parts 31 and 32 which are in contact with respective ends of the analytical column 10 (Figs. 4(f), 4(g)). The lower engaging parts 31 and 32 are formed as cutout portions to be in contact with the respective ends of the analytical column 10. The lower engaging part 31 is formed as a substantially rectangular cutout portion, and the lower engaging part 32 is formed as an arcuate cutout portion. An arc of the lower engaging part 32 has substantially the same shape as that of the different-shape part 9R as described above. The upper engaging part 21 and the lower engaging part 31 constitute the first engaging part to be engaged with the first passage port 4. The upper engaging part 22 and the lower engaging part 32 constitute a second engaging part to be engaged with the different-shape part 9R of the second passage port 9. As illustrated in Fig. 4(f), the lower engaging part 31 has its width larger than the width of the first passage port 4. Similar to the upper engaging part 21, it may be formed as a cutout portion with substantially the same width as that of the first passage port 4.

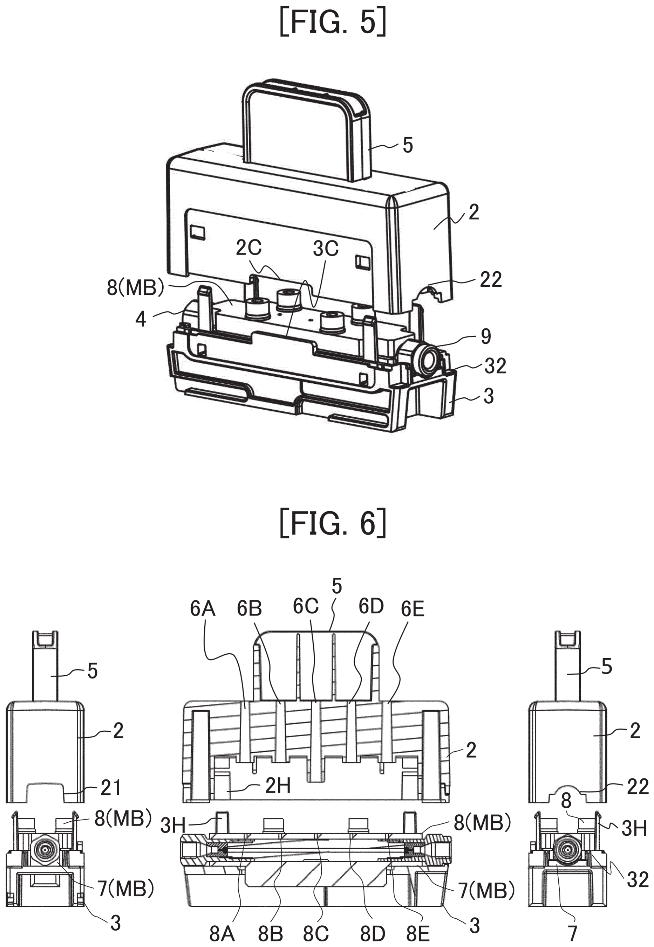

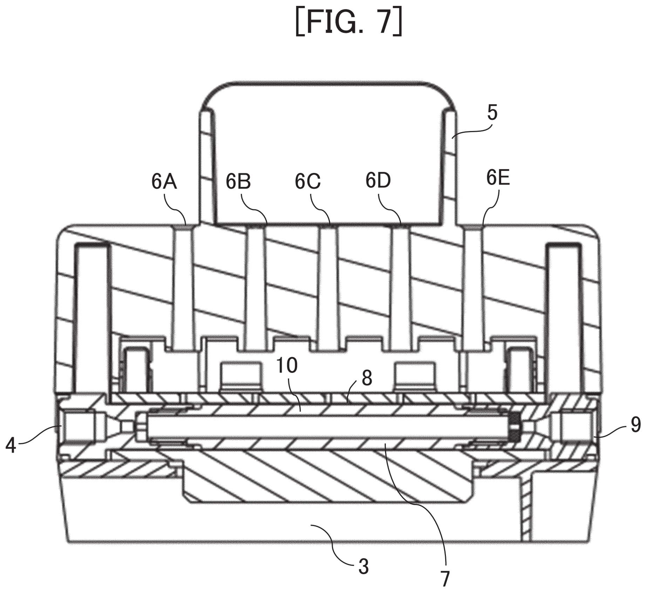

Referring to Figs. 5 to 7, a structure of the metal block MB will be described. Fig. 5 is a perspective drawing of the column cartridge 1 with which the metal block MB is assembled. Fig. 6 shows a front elevation, a left side view, and a right side view of the column cartridge 1. Fig. 7 is a sectional drawing of the column cartridge 1 with which the metal block MB is assembled.

An upper metal block portion 8 and the lower metal block portion 7 are disposed between the upper housing part 2 and the lower housing part 3. The upper metal block portion 8 and the lower metal block portion 7 constitute the metal block MB. For example, each of the upper metal block portion 8 and the lower metal block portion 7 may be formed of a material like metal with high thermal conductivity such as aluminum and the like.

The upper housing part 2 and the lower housing part 3 have a concave portion 2C and a convex portion 3C, respectively to allow fitting of those parts. Fitting of the convex portion 3C with the concave portion 2C allows the upper housing part 2 to be fitted with the lower housing part 3 so that the housing H is formed. The lower housing part 3 is provided with an upwardly extending tab 3H to be engaged with a fitting groove 2H formed in the upper housing part 2 when fitting the upper housing part 2 with the lower housing part 3.

The upper metal block portion 8 is disposed opposite to the upper housing part 2. The analytical column 10 is interposed between the upper metal block portion 8 and the lower metal block portion 7 for securely fixing the analytical column 10 in the column cartridge 1.

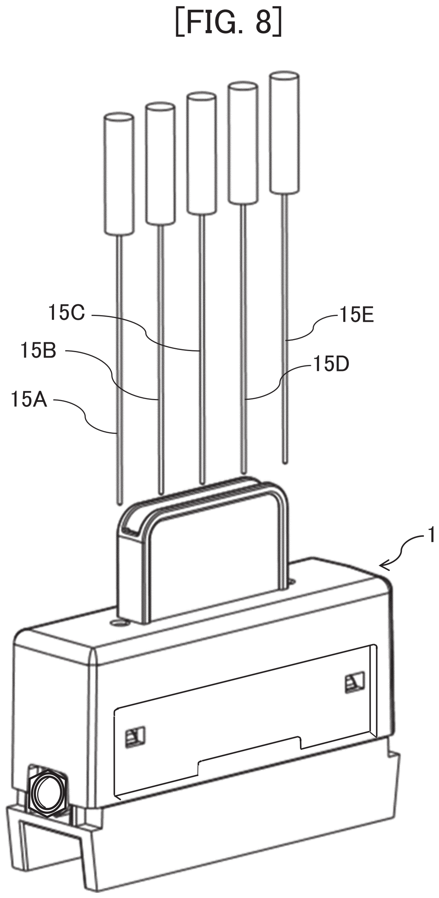

The upper metal block portion 8 has through holes 8A to 8E just below the windows 6A to 6E (Figs. 6, 8), respectively. Stick-type temperature sensor probes 15A, 15B, 15C, 15D, and 15E are inserted through those windows 6A to 6E and through holes 8A to 8E as illustrated in Fig. 8. Each diameter of the temperature sensor probes 15A, 15B, 15C, 15D, and 15E is approximately 0.7 mm. As each leading end of the temperature sensor probes 15A to 15E reaches the analytical column 10, the temperature of the analytical column 10 can be measured.

An operation for attaching the analytical column 10 to the column cartridge 1 will be described. The analytical column 10 has to be attached to the housing H in the correct direction. If it is attached in the wrong direction, correct analysis cannot be performed. In the present embodiment, the first passage port 4 and the second passage port 9 at the respective ends of the analytical column 10 are differently shaped from each other. The engaging parts 21, 22, 31 and 32 are shaped to be adapted to those different shapes, respectively. An operator is supposed to attach the analytical column 10 to fit the first passage port 4 and the second passage port 9 with the engaging parts 21, 22, 31 and 32, respectively. The analytical column 10, thus, can be inserted in the correct direction.

In the first embodiment, the second passage port 9 includes the different-shape part 9R. The operator can insert the analytical column 10 to make the respective arcs of the upper engaging part 22 and the lower engaging part 32 consistent with the different-shape part 9R while attaching the analytical column 10 to the metal block MB.

If the analytical column 10 is attached in the reverse direction (the analytical column 10 is attached in the state where the first passage port 4 is directed toward the engaging parts 31 and 32), the different-shape part 9R of the second passage port 9 is not consistent with the engaging parts 21 and 22. Meanwhile, the first passage port 4 is excessively large as compared to the engaging parts 31 and 32, and cannot be inserted. This makes the operator aware of the wrong attachment direction. The first embodiment ensures to insert the analytical column 10 in the correct direction. The cross sectional shape of the different-shape part 9R is different from that of the first passage port 4. It is preferable to determine the degree of difference on the basis of impossibility of attachment of the reversely directed analytical column 10.

### [Second Embodiment]

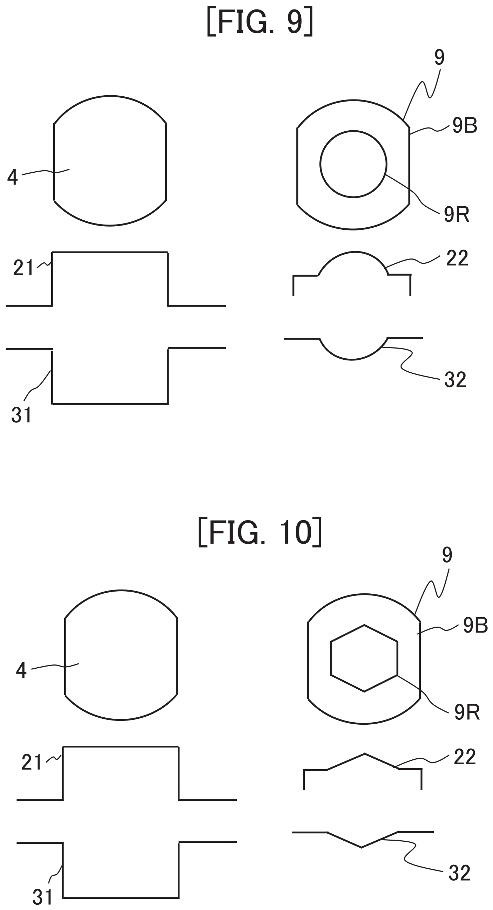

The column cartridge 1 according to a second embodiment will be described with reference to Fig. 9. The column cartridge 1 according to the second embodiment is different from that of the first embodiment in the structure of the analytical column 10 and the structure of the engaging part. As the entire structure and other details of the column cartridge 1 of the second embodiment are the same as those of the first embodiment (Figs. 1 to 3), repetitive descriptions are omitted.

Fig. 9 illustrates each cross sectional structure of the first passage port 4, the second passage port 9, and the engaging parts 21, 22, 31 and 32 of the analytical column 10 of the column cartridge 1 according to the second embodiment. Each cross sectional structure of the first passage port 4 and the second passage port 9 according to the first embodiment is hexagonal as described above. In the second embodiment, each cross sectional shape of the first passage port 4 and the second passage port 9 has two vertical sides facing with each other. In other words, each passage port has a barrel-shaped cross section. It is possible to insert the analytical column 10 so that two sides of the barrel-shaped first passage port 4, which are parallel to each other become consistent with the vertical outlines of the engaging parts 21 and 22. The different-shape part 9R has a circular cross section similar to the first embodiment. The second embodiment allows provision of similar effects to those obtained from the first embodiment.

### [Third Embodiment]

The column cartridge 1 according to a third embodiment will be described with reference to Fig. 10. The column cartridge 1 according to the third embodiment is different from that of the first embodiment in the structure of the analytical column 10 and the structure of the engaging part. As the entire structure and other details of the column cartridge 1 of the second embodiment are the same as those of the first embodiment (Figs. 1 to 3), repetitive descriptions are omitted.

Fig. 10 illustrates each cross sectional structure of the first passage port 4, the second passage port 9, and the engaging parts 21, 22, 31 and 32 of the analytical column 10 of the column cartridge 1 according to the second embodiment. As for the first passage port 4 and the second passage port 9 according to the third embodiment, the cross sectional shape of the different-shape part 9R is not circular but hexagonal, and the upper engaging part 31 and the lower engaging part 32 are shaped to be consistent with the hexagonal outlines, respectively. The third embodiment allows provision of similar effects to those obtained from the first embodiment.

It should be noted that the present invention is not limited to the embodiments described above, and includes various modifications. For example, the above-described embodiments have been described in detail in order to facilitate the understanding of the present invention, and the present invention is not necessarily limited to those including all of the described configurations. It is also possible to replace a structure of a certain example partially with a structure of another example. It is further possible to have a structure of a certain example added with a structure of another example. In addition, part of the configuration of each of the embodiments can be subjected to deletion, and addition and replacement with respect to other configurations.

### List of Reference Signs

1: Column cartridge, 2: upper housing part, 2C: concave portion, 2H: fitting groove, 3: lower housing part, 3A: opening, 3C: convex portion, 3H: tab, H: housing, 4: first passage port, 5: grip, 6A to 6E: window, 7: lower metal block portion, 7A: heat transfer part, 8: upper metal block portion, MB: metal block, 9: second passage port, 9B: base, 9R: different-shape part, 10: analytical column, 15A to 15E: temperature sensor probe, 21, 22: upper engaging part, 31, 32: lower engaging part

## Claims

1. A column cartridge to accommodate an analytical column for liquid chromatograph,
the analytical column including a first passage port having a first shape in a cross section orthogonal to a passage, and a second passage port having a second shape different from the first shape in the cross section,
the column cartridge comprising:
a first engaging part having a shape consistent with the first shape; and
a second engaging part having a shape consistent with the second shape.

2. The column cartridge according to claim 1, wherein
the second passage port has a base, and a different-shape part provided at an end of the base and having a sectional shape different from a sectional shape of the base, and
the second engaging part has a shape consistent with the shape of the different-shape part.

3. The column cartridge according to claim 2, wherein
the base has a hexagonal shape as the sectional shape,
the different-shape part has a circular shape as the sectional shape, and
the second engaging part has an arcuate cutout portion along the circular shape.

4. The column cartridge according to any one of claims 1 to 3, wherein
the first passage port is an inlet of the passage, and the second passage port is an outlet of the passage.

5. The column cartridge according to any one of claims 1 to 4, further comprising a housing to accommodate the analytical column, wherein
the first engaging part and the second engaging part are each formed on a side surface of the housing.

6. The column cartridge according to claim 2, wherein
the first passage port has a sectional shape having two sides parallel to each other in the cross section,
the base has a sectional shape having two sides parallel to each other in the cross section,
the different-shape part has a circular shape as the sectional shape,
the first engaging part has a cutout portion along the two sides, and
the second engaging part has an arcuate cutout portion along the circular shape.
